## Europäisches Patentamt

## European Patent Office

## Office européen des brevets

(11) Veröffentlichungsnummer: **0 169 406**

**A1**

## (12) EUROPÄISCHE PATENTANMELDUNG

(21) Anmeldenummer: 85108054.9

(22) Anmeldetag: 28.06.85

(51) Int. Cl.⁴: **G 11 B 21/02**
//G11B5/54

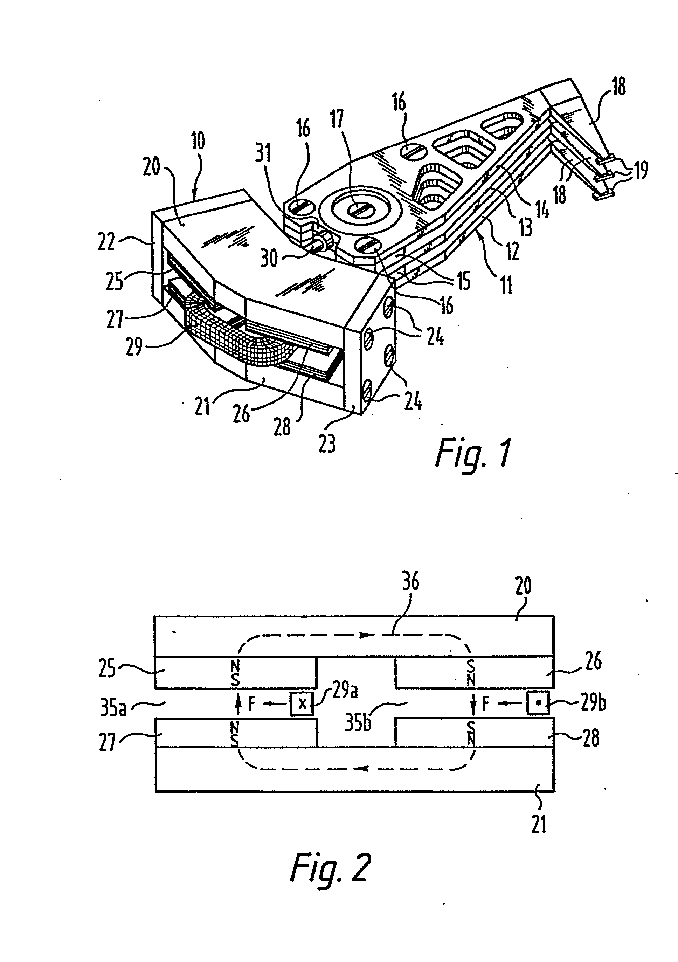

Ein Antrag nach Regel 88 EPÜ auf Berichtigung der Fig. 2 wurde am 26.08.1985 eingereicht.

(30) Priorität: 03.07.84 DE 3424456

(43) Veröffentlichungstag der Anmeldung:
29.01.86 Patentblatt 86/5

(84) Benannte Vertragsstaaten:
AT BE CH DE FR GB IT LI LU NL SE

(71) Anmelder: Nixdorf Computer Aktiengesellschaft
Fürstenallee 7
D-4790 Paderborn(DE)

(72) Erfinder: Baitz, Günter
Krantorweg 13
D-1000 Berlin 27(DE)

(72) Erfinder: Malke, Wolfgang
Hainbuchenstrasse 47
D-1000 Berlin 28(DE)

(74) Vertreter: Patentanwälte Schaumburg & Thoenes
Mauerkircherstrasse 31 Postfach 86 07 48
D-8000 München 86(DE)

(54) **Elektrodynamischer Antrieb zur Schwenkbewegung eines oder mehrerer Trägerarme für Wandlerköpfe von Plattenspeichern.**

(57) Bei einem elektrodynamischen Antrieb zur Schwenkbewegung eines oder mehrerer Trägerarme (11) für Wandlerköpfe (19) von Plattenspeichern ist eine ringförmige Flachspule (29) mit der Ringebene quer zur Schwenkachse des Trägerarms (11) in der Luftstrecke (35a, 35b) eines Permanentmagnetkreises angeordnet. Die Luftstrecke ist zweigeteilt, wobei ihre beiden Teile (35a, 35b) bezüglich des Permanentmagnetflusses (36) einander nachgeordnet sind. Jeder Teil (35a, 35b) der Luftstrecke ist für einen elektrodynamisch aktiven Abschnitt (29a, 29b) der Flachspule (29) vorgesehen, so daß an jedem dieser Abschnitte (29a, 29b) eine Kraftwirkung (F) auftritt, wenn die Flachspule (29) von einem Strom durchflossen wird. Da der Permanentmagnetkreis im übrigen über Eisenwege (20, 21) geschlossen ist, ergeben sich äußerst schwache Streufelder und eine optimale Verteilung der magnetischen Widerstände im Permanentmagnetkreis. Die elektrodynamisch inaktiven Abschnitte (29c, 29d) der Flachspule (29) liegen außerhalb des Eisenbereiches des Permanentmagnetkreises, so daß ihnen keine Eisenteile benachbart sind, die Wirbelströme aufnehmen können. Ein rahmenartiger Aufbau des Permanentmagnetkreises dient der Abschirmung von Streufeldern.

Fig. 1

### Elektrodynamischer Antrieb zur Schwenkbewegung eines oder mehrerer Trägerarme für Wandlerköpfe von Plattenspeichern

Die Erfindung betrifft einen elektrodynamischen Antrieb zur Schwenkbewegung eines oder mehrerer Trägerarme für Wandlerköpfe von Plattenspeichern, mit mindestens einem ortsfesten Permanentmagnetkreis mit zwei zueinander parallelen ferromagnetischen Platten, zwischen deren einander gegenüberliegenden Seiten ein Permanentmagnetkreis ausgebildet ist und eine an dem Trägerarm befestigte ringförmige Flachspule mit der Ringebene quer zur Schwenkachse des Trägerarms angeordnet ist, wobei die beiden Platten starr miteinander verbunden sind.

Ein elektrodynamischer Antrieb dieser Art ist z.B. aus der DE-OS 32 28 150 bekannt. Er eignet sich infolge der Verwendung einer Flachspule zu einem sehr kompakten Aufbau, wodurch Plattenspeicher geringer Höhe verwirklicht werden können, wenn diese nur wenige Speicherplatten enthalten müssen. Als Plattenspeicher kommen Magnetplattenspeicher oder auch optische Plattenspeicher in Betracht. Solche Geräte arbeiten derart, daß der Trägerarm, an dem ein elektromagnetischer bzw. elektrooptischer Wandlerkopf gehalten ist, in einer Schwenkbewegung über die jeweilige Speicherplatte hinweg bewegt wird, um diese abzutasten.

An seinem anderen freien Ende ist der Trägerarm mit der ringförmigen Flachspule versehen, deren Ringebene quer zur Schwenkachse, also etwa parallel zur Ebene der Speicherplatte, angeordnet ist. Die Flachspule befindet sich in der Luftstrecke eines Permanentmagnetkreises, der aus zwei Paaren einander gegenüberstehender Permanentmagnetplatten besteht, die in Richtung normal zu ihrer Plattenebene magnetisiert sind. Die Permanentmagnetplatten sind
auf ihrer der Luftstrecke abgewandten Seite jeweils an
einer Eisenplatte befestigt.

Die Eisenplatten bilden zusammen mit einer sie verbindenden Wand ein Gehäuse für die Flachspule, das allerdings
an den Seiten mit Aussparungen versehen ist, so daß hier
magnetische Streufelder in den Luftraum austreten können,
die besonders bei einem anzustrebenden kompakten Aufbau
eines Plattenspeichers die magnetischen Aufzeichnungen
auf einer unmittelbar neben dem Antrieb angeordneten
Magnetspeicherplatte stören können. An seiner Rückseite
ist das Gehäuse durch eine Eisenwand geschlossen und
schließt auch vorn die Flachspule oben und unten ein, so
daß ihre elektrodynamisch inaktiven Abschnitte großen
Eisenflächen gegenüberstehen, in denen die Kraftlinien
des von der Flachspule selbst erzeugten Magnetfeldes Wirbelströme und damit verbundene Bremseffekte hervorrufen
können.

Die vorstehend beschriebenen Erscheinungen führen zu einer
Schwächung der Antriebskraft und zu einer Beeinträchtigung
magnetischer Aufzeichnungen.

Die vergleichsweise geringe Antriebskraft führt auch dazu,
daß bei Verwendung mehrerer übereinander angeordneter und
auf einer gemeinsamen Schwenkachse gelagerter Trägerarme
für jeden Trägerarm ein individueller Antrieb erforderlich
ist, auch wenn die Trägerarme gleichsinnig zu bewegen sind.
Dies führt beim Aufbau von Geräten mit mehreren Speicherplatten zu einem erheblichen Aufwand für den Antrieb der
Trägerarme bei relativ geringer Antriebskraft.

Es ist deshalb Aufgabe der Erfindung, einen Antrieb anzugeben, der bei besonders kompaktem Aufbau eine höhere Antriebskraft als der bekannte Antrieb erzeugt und hierzu magnetische Verluste der vorstehend beschriebenen Art vermeidet.

Diese Aufgabe wird bei einem Antrieb der eingangs genannten Art erfindungsgemäß dadurch gelöst, daß elektrodynamisch inaktive Abschnitte der Flachspule außerhalb des Bereichs angeordnet sind, in dem die ferromagnetischen Platten einander gegenüberstehen, und daß die ferromagnetischen Platten an ihren außerhalb des Bewegungsbereichs der Flachspule quer zur Bewegungsrichtung liegenden Enden durch Wände zu einem Rahmen verbunden sind.

Bei einem Antrieb nach der Erfindung sind die beiden jeweils einer Flachspule benachbarten und die Permanentmagnete tragenden ferromagnetischen Platten so bemessen, daß die Flachspule mit ihren elektrodynamisch inaktiven Abschnitten aus dem mit ihnen gebildeten Zwischenraum herausragt. Die ferromagnetischen Platten bilden mit den sie verbindenden beiden Wänden einen Rahmen, der also die Flachspule nicht gehäuseartig einkapselt, so daß den elektrodynamisch inaktiven Abschnitten der Flachspule praktisch kein Wirbelströme aufnehmendes Material unmittelbar gegenübersteht. Entsprechende magnetische Verluste werden damit vermieden, so daß die mit dem Antrieb erzeugte Kraftwirkung größer als im bekannten Falle ist. Außerdem bieten die quer zur Bewegungsrichtung der Flachspule liegenden Wände die Möglichkeit der magnetischen Abschirmung zur Seite hin, so daß Streufeldwirkungen auf eine benachbarte Magnetspeicherplatte vermieden werden können, insbesondere wenn die seitlichen Wände aus einem ferromagnetischen Material bestehen.

Es ist somit möglich, einen elektrodynamischen Antrieb in sehr einfacher Anordnung aufzubauen und zum Antrieb auch großer Massen zu nutzen, so daß auch bei Mehrfachträgerarmen keine Vergrößerung der Abmessungen des Antriebs oder eine entsprechende Vervielfachung der Antriebselemente nötig ist.

Im Hinblick auf die mit einem Antrieb nach der Erfindung erhöhte Antriebskraft können beispielsweise insgesamt nur zwei Permanentmagnete vorgesehen sein, die zwischen sich den einen Teil der Luftstrecke bilden oder aber jeweils einem Teil der Luftstrecke zugeordnet sind. Auch ist es möglich, nur einen einzigen Permanentmagneten zu verwenden, der dann beispielsweise in eine der beiden zueinander parallelen ferromagnetischen Platten eingefügt sein kann. Jede dieser möglichen Permanentmagnetanordnungen führt zu dem über die beiden Platten geleiteten Magnetfluß, wie er durch die gemäß der Erfindung vorgesehene Reihenschaltung der beiden Teile der Luftstrecke vorgegeben ist.

Durch den rahmenartigen Aufbau ergibt sich ein einheitliches Bauteil für den elektrodynamischen Antrieb, das sehr einfach zu montieren ist und keinerlei besondere Justagearbeiten nach dem Einbau in ein Plattenspeichergerät erfordert, da die Länge der beiden Teile der Luftstrecke bereits beim Aufbau des die Flachspule aufnehmenden Rahmens durch die Abmessung der die ferromagnetischen Platten miteinander verbindenden Wände fixiert wird.

Ein Ausführungsbeispiel der Erfindung wird im folgenden an Hand der Figuren beschrieben. Es zeigen:

Fig. 1 eine perspektivische Darstellung eines elektrodynamischen Antriebs, der mit einem Mehrfach-Trägerarm für die Abtastung von Magnetspeicherplatten gekoppelt ist,

Fig. 2 eine schematische Darstellung des bei der Anordnung nach Fig. 1 verwirklichten Permanentmagnetkreises sowie seiner Wirkung auf die Flachspule und

Fig. 3 eine Draufsicht auf einen Magnetplattenspeicher, in den der Antrieb nach Fig. 1 und 2 eingebaut ist.

In Fig. 1 ist ein elektrodynamischer Antrieb 10 für einen Mehrfach-Trägerarm 11 dargestellt, welcher in einem Magnetplattenspeicher Verwendung findet und aus drei übereinander angeordneten einzelnen Trägerarmen 12, 13, 14 besteht. Diese sind unter Zwischenlage von Abstandselementen 15 jeweils bei 16 zum Beispiel durch Schrauben miteinander verbunden und bilden so den Mehrfach-Trägerarm 11, der bei 17 in an sich bekannter Weise auf einer vertikalen Schwenkachse schwenkbar gelagert ist, so daß die an seinen freien Enden an federnden Zungen 18 gehaltenen Wandlerköpfe 19 jeweils über eine in Fig. 1 nicht gezeigte Magnetspeicherplatte bewegt werden, wenn der Mehrfach-Trägerarm 11 in Schwenkbewegung um die Schwenkachse 17 versetzt wird.

Diese Schwenkbewegung wird durch den elektrodynamischen Antrieb 10 erzeugt, der als ein einheitliches Bauelement mit einem Rahmen aufgebaut ist, der aus zwei zueinander parallelen horizontalen Eisenplatten 20 und 21 und sie als Abstandhalter verbindenden Seitenplatten 22 und 23 zusammengesetzt ist. Die Seitenplatten 22 und 23 sind mit den Eisenplatten 20 und 21 verschraubt, wie es bei 24 für die Seitenplatte 23 gezeigt ist. An den Innenseiten der beiden Eisenplatten 20 und 21 sind Permanentmagnete 25, 26, 27, 28 vorgesehen, die mit den Eisenplatten 20 und 21 z.B. verklebt sind. Die Permanentmagnete 25 bis 28 sind plattenförmig und, wie noch beschrieben wird, normal zu ihrer Plattenebene magnetisiert. Sie bilden zwischen sich jeweils einen Teil eines Luftweges, in dem eine ringförmige Flachspule 29 angeordnet ist. Diese Flachspule 29 ist mit dem Mehrfach-Trägerarm 11 starr verbunden, so daß sie ausgehend von der Schwenkachse 17 einen zweiten Hebelarm bildet. Der Mehrfach-Trägerarm 11 wird somit um die Schwenkachse 17 geschwenkt, wenn eine Kraftwirkung an der Flachspule 29 aufgrund eines in ihr erzeugten Stromflusses auftritt.

An der oberen Eisenplatte 20 ist ein Stift 30 befestigt, der in eine Aussparung 31 des Mehrfach-Trägerarms 11 hineinragt. Der Stift 30 dient als Anschlag und begrenzt die Schwenkbewegung des Mehrfach-Trägerarms 11 in beiden Schwenkrichtungen, wenn die seitlichen Kanten der Aussparung 31 an ihn anschlagen.

Fig. 1 zeigt, daß der elektrodynamische Antrieb 10 in der Draufsicht eine Formgebung hat, die einem Kreisringabschnitt angenähert ist. Dadurch ergibt sich bei kleinstmöglichem Raumaufwand für den Antrieb eine stets gleichbleibende Konfiguration zwischen den Permanentmagneten 25 bis 28 und der Flachspule 29.

In Fig. 2 ist schematisch der Permanentmagnetkreis des elektrodynamischen Antriebs 10 aus Fig. 1 dargestellt. Der Permanentmagnetkreis ist aus den Eisenplatten 20 und 21, den Permanentmagneten 25 bis 28 und den zwischen ihnen liegenden Teilen 35a und 35b der Luftstrecke gebildet. Die Permanentmagnete 25 bis 28 sind so magnetisiert, daß in dem Permanentmagnetkreis ein Magnetfluß entsteht, wie er durch die gestrichelte und mit Richtungspfeilen versehene Linie 36 schematisch angedeutet ist. Dies bedeutet, daß die Teile 35a und 35b der Luftstrecke des Permanentmagnetkreises bezüglich des Magnetflusses einander nachgeordnet sind. Die Flachspule 29 (Fig. 1) ist mit ihren beiden elektrodynamisch aktiven Abschnitten 29a und 29b jeweils in dem in Fig. 2 rechts liegenden Anfangsabschnitt des jeweiligen Teils 35a bzw. 35b der Luftstrecke angeordnet, wozu die Flachspule 29 in an sich bekannter Weise z.B. durch Federkraft in der entsprechenden Anfangslage gehalten wird.

Wenn die Flachspule 29 von einem elektrischen Strom durchflossen wird, so ergeben sich in ihren beiden elektrodynamisch aktiven Abschnitten 29a und 29b zueinander entgegengesetzt gerichtete Stromflüsse, wie es in Fig. 2 angedeutet ist. Für den Abschnitt 29a tritt dann beispiels-

weise ein Stromfluß in die Zeichenebene hinein und für den Abschnitt 29b ein Stromfluß aus der Zeichenebene heraus auf. Bei der in Fig. 2 gezeigten Richtung des Magnetflusses im jeweiligen Teil 35a bzw. 35b der Luftstrecke ergibt sich dann eine Kraftwirkung F auf jeden Abschnitt 29a und 29b der Flachspule 29, die in Fig. 2 jeweils durch einen entsprechend bezeichneten Pfeil angedeutet ist. Dadurch verstellt sich die Flachspule aus ihrer Anfangsstellung bezüglich der Darstellung in Fig. 2 nach links, wodurch der Mehrfach-Trägerarm 11 (Fig. 1) entsprechend geschwenkt wird. Die Erzeugung des elektrischen Steuerstroms für die Flachspule zur Einstellung des Mehrfach-Trägerarms 11 in unterschiedliche Schwenkstellungen ist an sich bekannt und muß hier nicht näher erläutert werden.

Die schematische Darstellung in Fig. 2 zeigt, daß der Permanentmagnetkreis ein geschlossener Kreis ist, dessen Stellen erhöhten magnetischen Widerstands lediglich durch die beiden Teile 35a und 35b der Luftstrecke gebildet sind, während im übrigen der Magnetfluß über Eisenwege geführt ist, wie es die gestrichelte Linie 36 zeigt. Dadurch bleibt der Magnetfluß im wesentlichen auf diese Teile des Permanentmagnetkreises konzentriert, und es treten nur äußerst schwache Streuflüsse beiderseits der Anordnung auf. Damit verbundene Streufelder können durch Verwendung eines ferromagnetischen Materials für die Seitenplatten 22 und 23 (Fig. 1) beseitigt werden. Hier ist jedoch zu beachten, daß die Seitenplatten 22 und 23 dann möglicherweise magnetische Nebenschlüsse bilden, die den Magnetfluß im Permanentmagnetkreis schwächen könnten. Aus diesem Grunde ist dann eine geeignete Auswahl des ferromagnetischen Materials sowie der Abmessungen der Seitenplatten zu treffen. Auch sollten die Seitenplatten den mit Rücksicht auf die Abmessungen eines mit dem Antrieb auszurüstenden Plattenspeichers maximal möglichen Abstand zu den Permanentmagneten haben.

Aufgrund der vorstehenden Erläuterung des in Fig. 2 schematisch dargestellten Permanentmagnetkreises ist unmittelbar verständlich, daß der permanentmagnetische Anteil nicht unbedingt durch vier Permanentmagnete gebildet sein muß. Bei geeigneter Materialwahl für den Permanentmagneten genügt gegebenenfalls auch nur ein permanentmagnetisches Element, das an beliebiger Stelle in den Permanentmagnetkreis eingefügt ist. Auch ist eine Anordnung denkbar, bei der nicht beide Eisenplatten 20 und 21 mit Permanentmagneten versehen sind, sondern beispielsweise nur eine, so daß dann nur zwei permanentmagnetische Elemente vorhanden sind. Nach Kenntnis des in Fig. 2 dargestellten Prinzips ergeben sich für den Fachmann Varianten zur Anpassung an vorgegebene Bedingungen, wie Abmessungen, zu erzeugende Antriebskraft usw.. Jede dieser Varianten wird sich jedoch dadurch auszeichnen, daß auf beide elektrodynamisch aktiven Abschnitte der Flachspule gleichsinnig gerichtete Kräfte einwirken und daß außer den Teilen der Luftstrecke, in denen diese Abschnitte angeordnet sind, keine weiteren Luftstrecken im Permanentmagnetkreis vorhanden sind, so daß sich eine insgesamt optimale Nutzung des Magnetflusses an der Flachspule und im Permanentmagnetkreis ergibt.

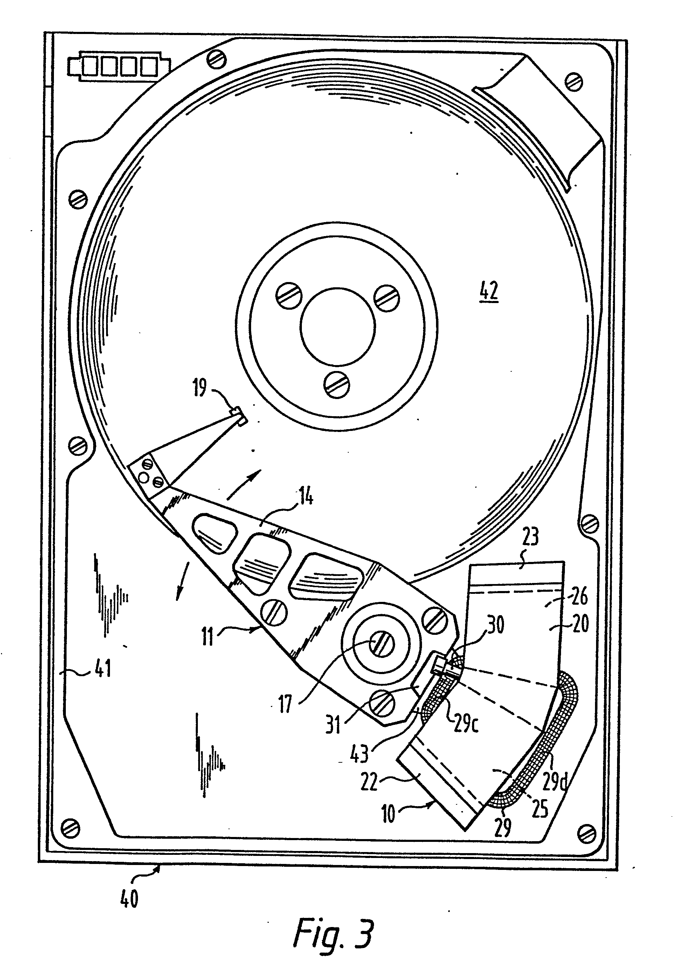

In Fig. 3 ist ein Magnetplattenspeicher 40 dargestellt, in den der zuvor beschriebene elektrodynamische Antrieb 10 zusammen mit dem Mehrfach-Trägerarm 11 eingebaut ist. Der Magnetplattenspeicher 40 hat ein kastenartiges Gehäuse 41, in dem mehrere Magnetspeicherplatten um eine vertikale Achse drehbar gelagert sind. In Fig. 3 ist nur die oberste Magnetspeicherplatte 42 zu erkennen. Ebenso ist auch nur der oberste Trägerarm 14 des Mehrfach-Trägerarms 11 zu erkennen. Dieser führt seinen Wandlerkopf 19 über die Magnetspeicherplatte 42, wenn er in den in Fig. 3 angedeuteten Pfeilrichtungen geschwenkt wird. Hierzu kann eine Anfangsstellung des Trägerarms 14 durch eine in Fig. 3 nicht gezeigte Feder festgelegt sein.

Der Trägerarm 14 bzw. der Mehrfach-Trägerarm 11 ist mit der Flachspule 29 starr über eine Spulenhalterung 43 verbunden, die an dem hinteren Ende des Mehrfach-Trägerarms 11 in beliebiger Weise angebracht sein kann. Es ist lediglich wichtig, daß der Mehrfach-Trägerarm 11 mit der Flachspule 29 starr verbunden ist. Fig. 3 zeigt in der Draufsicht auch den Anschlagstift 30, der in die Aussparung 31 des Mehrfach-Trägerarms 11 hineinragt und in bereits beschriebener Weise den Schwenkbereich des Mehrfach-Trägerarms 11 begrenzt.

Der elektrodynamische Antrieb 10 ist in Fig. 3 mit seiner oberen Eisenplatte 20 und den beiden Seitenplatten 22 und 23 zu erkennen. Dabei wird deutlich, daß der mit den Eisenplatten 20 und 21 sowie den Seitenplatten 22 und 23 gebildete Rahmen von oben gesehen der Form eines Kreisringabschnitts angenähert ist, so daß die Flachspule 29 in praktisch jeder Schwenkstellung einer gleichbleibenden Magnetkonfiguration gegenübersteht. Die Flachspule 29 hat die Form eines Trapezringes, wobei die Schmalseite und die Breitseite des Trapezes die elektrodynamisch inaktiven Abschnitte der Flachspule 29 bilden. Diese Abschnitte sind in Fig. 3 mit 29c und 29d bezeichnet. Sie liegen außerhalb des mit den Eisenplatten 20 und 21 sowie den Seitenplatten 22 und 23 aufgebauten Rahmens, so daß sie von dem Permanentmagnetfluß nicht beaufschlagt werden und ihrerseits auch keine Wirbelströme in unmittelbar benachbarten Metallteilen induzieren können. Die Trapezform der Flachspule 29 ergibt sich in Anpassung an die Kreisringabschnittsform des Rahmens. Entsprechend trapezförmig sind auch die Permanentmagnete 25 bis 28 ausgebildet. In Fig. 3 sind nur die oberen Permanentmagnete 25 und 26 gestrichelt angedeutet, da sie unter der oberen Eisenplatte 20 liegen. Der gesamte elektrodynamische Antrieb 10 ist somit in seiner Form der Schwenkbewegung der Flachspule 29 angepaßt.

Die elektrodynamisch aktiven Abschnitte 29a, 29b (Fig. 2) der Flachspule 29 sind in Fig. 3 nicht zu erkennen. Es ist aber ersichtlich, daß diese Abschnitte während ihrer Schwenkbewegung von der Anfangsstellung bis in die Endstellung jeweils gleichbleibenden Anteilen des Magnetflusses in der Luftstrecke ausgesetzt sind. In Fig. 3 ist die Flachspule 29 in ihrer durch die an Hand der Fig. 2 erläuterte Bewegung erreichten Endstellung dargestellt, die bei der in Fig. 2 gezeigten Anordnung jeweils am linken Ende des betreffenden Teils der Luftstrecke liegen würde. Wenn die Flachspule 29 aus dieser in Fig. 3 gezeigten Stellung wieder in ihre Anfangsstellung zurückgeführt wird, so liegt dann der jeweilige elektrodynamisch aktive Abschnitt 29a bzw. 29b (Fig. 2) unter dem anderen Randabschnitt des jeweiligen Permanentmagneten 25 bzw. 26. Wichtig bei diesem Schwenkvorgang ist, daß der jeweilige elektrodynamisch aktive Abschnitt der Flachspule 29 immer in dem Teil des Luftweges verbleibt, der ihm zugeordnet ist, und nicht in den anderen Teil des Luftweges gelangt, da die Richtung des Magnetflusses dort die angestrebte Kraftwirkung unterbinden würde.

Es ist darauf hinzuweisen, daß der mit den Eisenplatten 20, 21 und den Seitenwänden 22, 23 gebildete Rahmen des elektrodynamischen Antriebs 10 aus fertigungstechnischen Gründen von der idealen Kreisringabschnittsform abweicht. So zeigt Fig. 3 lediglich eine Annäherung an diese Form, die durch polygonartig zusammengesetzte geradlinige Kanten bedingt ist und aus zwei etwa trapezförmigen Abschnitten sowie einem diese verbindenden dreieckförmigen Abschnitt besteht, so daß sich insgesamt ein bogenförmiger Rahmen ergibt.

Der äußerst kompakte Aufbau des elektrodynamischen Antriebs 10 wirkt sich besonders vorteilhaft im Hinblick auf geringstmögliche Störungen der auf den Magnetspeicherplatten gespeicherten Informationen durch Streufelder aus.

Fig. 3 zeigt ein Magnetspeicherplattengerät für Kompaktspeicherplatten in natürlicher Größe. Der elektrodynamische Antrieb 10 hat derart geringe Abmessungen, daß er in einem solchen vergleichsweise kleinen Gerät ohne Probleme untergebracht werden kann und trotzdem einen solchen Abstand zu den Magnetspeicherplatten hat, daß Störungen der gespeicherten Informationen durch magnetische Streufelder nicht zu befürchten sind. Dies ist insbesondere auch darauf zurückzuführen, daß bei einem Antrieb dieser Art Streufelder ohnehin nur sehr schwach auftreten, was auf die an Hand der Fig. 2 erläuterte Wirkungsweise bzw. den großen Eisenanteil des Permanentmagnetkreises zurückzuführen ist.

<u>Patentansprüche</u>

1. Elektrodynamischer Antrieb zur Schwenkbewegung eines oder mehrerer Trägerarme für Wandlerköpfe von Plattenspeichern, mit mindestens einem ortsfesten Permanentmagnetkreis mit zwei zueinander parallelen ferromagnetischen Platten, zwischen deren einander gegenüberliegenden Seiten ein Permanentmagnetkreis ausgebildet ist und eine an dem Trägerarm befestigte ringförmige Flachspule mit der Ringebene quer zur Schwenkachse des Trägerarms angeordnet ist, wobei die beiden Platten starr miteinander verbunden sind, dadurch g e k e n n - z e i c h n e t , daß elektrodynamisch inaktive Abschnitte (29c, 29d) der Flachspule (29) außerhalb des Bereichs angeordnet sind, in dem die ferromagnetischen Platten (20, 21) einander gegenüberstehen, und daß die ferromagnetischen Platten (20, 21) an ihren außerhalb des Bewegungsbereichs der Flachspule (29) quer zur Bewegungsrichtung liegenden Enden durch Wände (22, 23) zu einem Rahmen verbunden sind.

2. Antrieb nach Anspruch 1, dadurch g e k e n n z e i c h - n e t , daß der mit den ferromagnetischen Platten (20, 21) und den Wänden (22, 23) gebildete Rahmen eine der Schwenkbewegung der Flachspule (29) im wesentlichen angepaßte Form hat und daß die Platten (20, 21) zumindest annähernd die Form mit der Schwenkachse (17) konzentrischer Kreisringabschnitte haben.

3. Antrieb nach Anspruch 1 oder 2, dadurch g e k e n n - z e i c h n e t , daß die Wände (22, 23) aus einem ferromagnetischen Material bestehen.

4. Antrieb nach Anspruch 3, dadurch  g e k e n n - z e i c h n e t ,  daß die ferromagnetischen Wände (22, 23) im Sinne minimalen magnetischen Nebenschlusses bemessen bzw. zum jeweils benachbarten Permanentmagneten (25, 26, 27, 28) beabstandet sind.

5. Antrieb nach einem der vorhergehenden Ansprüche, dadurch g e k e n n z e i c h n e t ,  daß in dem Permanentmagnetkreis mindestens ein an einer ferromagnetischen Platte (20, 21) befestigter plattenförmiger Permanentmagnet (25, 26, 27, 28) vorgesehen ist.

6. Antrieb nach Anspruch 5, dadurch  g e k e n n - z e i c h n e t ,  daß jeder plattenförmige Permanentmagnet (25, 26, 27, 28) jeweils trapezförmig entsprechend dem Schwenkbereich des jeweiligen elektrodynamisch aktiven Abschnitts (29a, 29b) der trapezringförmigen Flachspule (29) ausgebildet ist.

7. Antrieb nach Anspruch 6, dadurch  g e k e n n - z e i c h n e t ,  daß der mit den ferromagnetischen Platten (20, 21) und den Seitenwänden (22, 23) gebildete Rahmen entsprechend dem Schwenkbereich der Flachspule (29), mit Blickrichtung auf deren Bewegungsebene gesehen, zwei etwa trapezförmige Abschnitte hat, die über einen etwa dreieckförmigen Abschnitt miteinander zu einer Bogenform verbunden sind.

Fig. 1

Fig. 2

*Fig. 3*

PATENTANWÄLTE
## SCHAUMBURG & THOENES
EUROPEAN PATENT ATTORNEYS

: : .... ... 0169406

85 108 054.9

Nixdorf Computer AG

KARL-HEINZ SCHAUMBURG, Dipl.-Ing.
DR. DIETER THOENES, Dipl.-Phys.
KLAUS ENGLAENDER, Dipl.-Ing.

EPA-EPO-OEB
DG 1
Reçu le
0 2 0 9 1985

26. August 1985

N 7432 EP - SBbf

EPA-EPO-OEB
MÜNCHEN
Empfang bestätigt
Receipt acknowledged
Accusé réception

Auf EPA Form 1110 (06.83) vom
23. August 1985

In Fig. 2 wurde ein offensichtlicher
Fehler beseitigt, der in der Angabe
einer falschen Stromrichtung in den
Spulenteilen 29a und 29b bestand.
Es wird beantragt, die mit Eingabe
vom 8. August 1985 eingereichte
Zeichnung der Veröffentlichung zugrunde zu legen.

An das
Europäische Patentamt
8000 München 2

Schaumburg

P.O. BOX 860748 · D-8000 MÜNCHEN 86 · MAUERKIRCHERSTRASSE 31
TELEFON (089) 987897 · TELEFAX II + III (089) 987898 · TELEX 522019 ESPAT D

Europäisches Patentamt

# EUROPÄISCHER RECHERCHENBERICHT

**0169406**
Nummer der Anmeldung

EP 85 10 8054

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | PATENTS ABSTRACTS OF JAPAN, Band 7, Nr. 260 (P-237)[1405], 18. November 1983; & JP - A - 58 141 471 (NIPPON DENKI K.K.) 22-08-1983 <br> * Insgesamt * | 1,5 | G 11 B 21/02 // <br> G 11 B 5/54 |
| A | IDEM | 3,6 | |
| Y | FR-A-2 392 466 (BASF AG) <br> * Seite 2, Zeilen 15-36; Seite 5, Zeilen 9-24; Seite 7, Zeile 12 - Seite 8, Zeile 24; Figuren 1-3 * | 1,5 | |
| A | DE-A-3 337 499 (HITACHI LTD.) <br> * Seite 4, Zeile 17 - Seite 9, letzte Zeile; Figuren 2-6 * | 1,3 | |
| A | PATENTS ABSTRACTS OF JAPAN, Band 6, Nr. 192 (P-145)[1070], 30. September 1982; & JP - A - 57 103 171 (FUJITSU K.K.) 26-06-1982 <br> * Insgesamt * | 1,2,5, 6 | RECHERCHIERTE SACHGEBIETE (Int. Cl.4) <br><br> G 11 B |
| P,A | IBM TECHNICAL DISCLOSURE BULLETIN, Band 27, Nr. 2, Juli 1984, Seiten 1081-1082, Armonk, N.Y., US; R.A. COOPER u.a.: "Actuator for flexible disk file" | 1-3,5, 6 | |

Der vorliegende Recherchenbericht wurde für alle Patentansprüche erstellt

| Recherchenort <br> DEN HAAG | Abschlußdatum der Recherche <br> 26-09-1985 | Prüfer <br> LEHNBERG C.R. |
|---|---|---|